# EUROPÄISCHE PATENTSCHRIFT

(11) **EP 0 582 544 B1**
(45) Veröffentlichungstag und Bekanntmachung des Hinweises auf die Patenterteilung: **18.12.1996**
(21) Anmeldenummer: 93810492.4
(22) Anmeldetag: 09.07.1993
(51) Int. Cl.: B61D 17/04

(54) **Wagenkasten von Schienenfahrzeugen**
Body of railway vehicles
Laisse de voitures ferroviaires

(30) Priorität: 05.08.1992 CH 2460/92
(43) Veröffentlichungstag der Anmeldung: 09.02.1994
(73) Patentinhaber: Alusuisse Technology & Management AG, 8212 Neuhausen am Rheinfall (CH)
(72) Erfinder: Destefani, Giorgio, CH-6942 Savosa (CH); Stebler, Rudolf, CH-8907 Wettswil (CH); Mellado, Francisco, E-28031 Madrid (ES); Archilla, Luis, E-28015 Madrid (ES)

(56) Entgegenhaltungen:
- EP-A- 0 405 889

## Beschreibung

Die Erfindung bezieht sich auf einen Wagenkasten von Schienenfahrzeugen, insbesondere zur Personenbeförderung, mit im Bereich der metallischen Seitenwandprofile und/oder Fensterpfosten innenseitig befestigten, senkrechten Versteifungselementen für die Struktur.

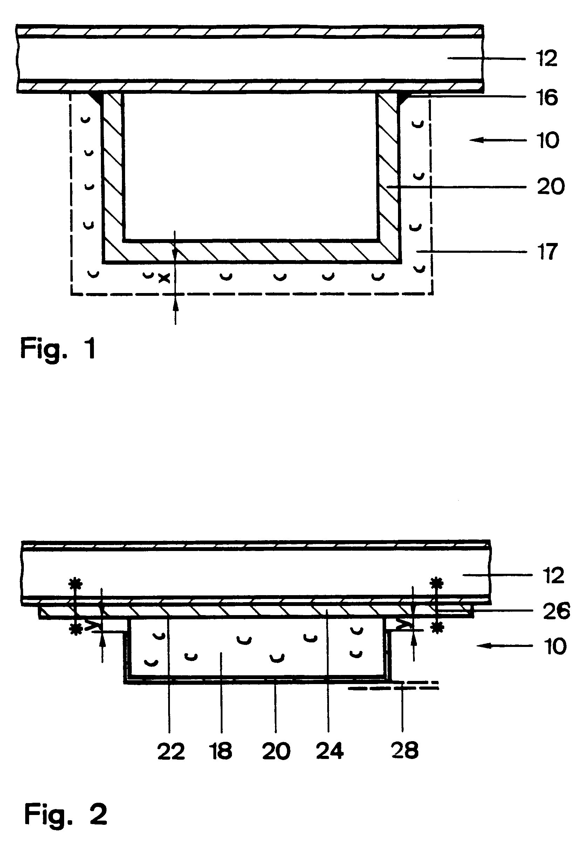

Nach dem bekannten Stand der Technik werden bei metallischen Wagenkastenaufbauten innenliegende Versteifungselemente, beispielsweise in Form eines metallischen U-Profils, direkt an die Seitenwandprofile und/oder Fensterpfosten geschweisst, geschraubt oder genietet. Dies wird in Fig. 1 dokumentiert, welche einen horizontalen Teilschnitt durch einen Wagenkasten im Bereich eines Versteifungselementes 10 schematisch darstellt. Dieses U-förmige metallische Versteifungselement 10 ist mit einem ebenfalls metallischen Seitenwandprofil 12, welches auch ein Fensterpfosten sein könnte, über zwei Schweissnähte 16 unlösbar verbunden. Da zwischen dem Seitenwandprofil 12 oder Fensterpfosten und dem Versteifungselement 10 eine Kältebrücke ausgebildet ist, wird auch das letztere mit einer aussenliegenden Isolationsschicht 17 verkleidet.

Strukturbedingt benötigen die Versteifungselemente 10 einen sich aus den mechanischen Festigkeitsanforderungen ergebenden Platzbedarf. Im Hinblick auf die vorgegebene Innenbreite des Fahrzeugs bleibt daher nur wenig Platz für die Dicke x der Isolationsschicht 17 übrig. Dies hat wiederum zur Folge, dass die am Fenster sitzenden Fahrgäste im Bereich der anliegenden Schulter und/oder des betreffenden Arms eine relativ kühle Berührungsfläche haben und in ihrer Behaglichkeit gestört sind.

Die Erfinder haben sich die Aufgabe gestellt, einen Wagenkasten der eingangs genannten Art zu schaffen, welcher nicht nur eine hinreichende mechanische Festigkeit durch Anordnung von Versteifungselementen aufweist, sondern diese vom Fahrgast als behaglich empfunden werden, ohne dass die durch Normmasse bestimmte Innenbreite des Wagenkastens verkleinert ist. Selbstverständlich müssen auch alle konstruktiven und wirtschaftlichen Anforderungen erfüllt sein.

Die Aufgabe wird erfindungsgemäss dadurch gelöst, dass als Sandwichbauteil ausgebildete Versteifungselemente einen formfesten Kern aus einem Isoliermaterial und ein diesen Kern teilweise umhüllendes metallisches Deckprofil umfassen, wobei das Deckprofil der aufgebrachten Versteifungselemente überall in einem minimalen Abstand von den Seitenwandprofilen und/oder Fensterpfosten verbleibt, eine gute Wärmeisolierung zu gewährleisten. Spezielle und weiterbildende Ausführungsformen der Erfindung sind Gegenstand von abhängigen Patentansprüchen.

Sandwichbauteile sind wenigstens zweischichtige Verbundelemente aus einem leichten Kern und wenigstens einer schubfest angeschlossenen, dünnen Aussenhaut. Sandwichbauteile können nicht nur in der häufigsten Form von planparallelen Platten vorkommen. Kern und Aussenhaut, im vorliegenden Fall das Deckprofil, können jede beliebige, auch asymmetrische Querschnittsform bilden. Die Möglichkeiten von Werkstoffkombinationen sind praktisch unbeschränkt, da sowohl für die Aussenhaut als auch für den Kern eine grosse Auswahl geeigneter Werkstoffe zur Verfügung steht, insbesondere auch Aluminiumlegierungen, Stahl und hochfeste Kunststoffe. In besonderen Masse geeignet sind superplastisch verformbare Aluminiumlegierungen. Als formfester Kern eignet sich insbesondere Kunststoff-Hartschaum, vorzugsweise aus Polyurethan, Polyvinylchlorid, Polymethacrylimid oder Polyetherimid.

Das Deckprofil der erfindungsgemäss eingesetzten Versteifungselemente, welches über seine Länge einen variablen Querschnitt aufweisen kann, ist im Querschnitt U-förmig, trapezförmig, kreisbogenförmig oder in jeder anderen, im Fahrzeugbau anwendbaren geometrischen Form ausgebildet und mit dem entsprechend ausgebildeten formfesten Kern verklebt.

Nach einer ersten Variante der Erfindung ist die dem Deckprofil gegenüberliegende Fläche des formfesten Kerns der Versteifungselemente direkt auf die Stirnwandprofile und/oder Fensterpfosten geklebt. Das Deckblech berührt die metallische Oberfläche der Seitenwandprofile und/oder Fensterpfosten nirgends.

Nach einer zweiten Variante der Erfindung sind die Versteifungselemente so ausgebildet, dass die dem Deckprofil gegenüberliegende Fläche des formfesten Kerns mit einer metallischen, vorzugsweise seitlich abkragenden Grundplatte verklebt ist. Diese Grundplatte besteht vorzugsweise aus einer Aluminiumlegierung oder aus Stahl, zweckmässig aus dem gleichen Metall wie das Deckprofil. Die metallische Grundplatte nach der Montage des Sandwichbauteils ist mit den Seitenwandprofilen und/oder Fensterpfosten verbunden, bevorzugt durch Vernieten, Verschrauben, Verschweissen oder Verkleben, welche Verfahren dem Fahrzeugbauer geläufig sind.

Nach beiden Varianten ist das Deckprofil der montierten Versteifungselemente in Abstand von den Seitenwandprofilen und/oder Fensterpfosten (Variante 1) oder der Grundplatte (Variante 2) zweckmässig 1 bis 5 mm, vorzugsweise 2 bis 3 mm, entfernt. Dieser Abstand gibt in jedem Fall eine sehr gute Isolierung des Deckprofils, eine nach dem Stand der Technik übliche Aussenisolierung gemäss Fig. 1 ist nicht notwendig.

Die als Sandwichbauteil ausgebildeten Versteifungselemente können in den für die jeweilige Struktur notwendigen Abmessungen hergestellt und wenn nötig auch gelagert werden, in jedem Fall ist eine sehr gute thermische Isolation gewährleistet. Auch bei einer Verkleidung der Versteifungselemente mit einer dünnen Abdeckung bekommen die Fahrgäste nie eine kalte Oberfläche zu spüren.

Die weiteren Vorteile der Erfindung können wie folgt zusammengefasst werden:
- Die Sandwichbauteile haben bei maximaler Platzausnützung im Innenraum des Wagenkastens eine grosse Steifigkeit.
- Die als Versteifungselemente ausgebildeten Sandwichbauteile haben ein geringes Gewicht, da in grösseren Abmessungen mit weniger Metall ein niedrigeres Gewicht erzielt werden kann.
- Der Innenraum des Fahrzeugs bietet mehr Platz, weil die zusätzliche Aussenisolationsschicht bisher bekannter Ausführungsformen entfällt.
- Die Deckprofile können mit superplastischen Verformungsverfahren in vielen geometrischen Querschnittsformen hergestellt werden.
- Es bedarf nur einer dünnen Abdeckung der Versteifungselemente, um allen Belangen eines inneren Design gerecht zu werden.

Die Erfindung wird anhand der in der Zeichnung dargestellten Ausführungsbeispiele näher erläutert. Es zeigen schematisch:
- Fig. 2 einen Querschnitt durch ein montiertes Versteifungselement mit U-förmigem Deckprofil,
- Fig. 3 eine Variante gemäss Fig. 2, mit trapezförmigem Deckprofil, und
- Fig. 4 eine weitere Variante gemäss Fig. 2, mit kreisbogenförmig ausgebildetem Deckprofil.

Im Gegensatz zum den Stand der Technik darstellenden Versteifungselement 10 gemäss Fig. 1 ist das in Fig. 2 dargestellte Versteifungselement 10 viel schlanker ausgebildet. Auf einen Kern 18 aus Kunststoff-Hartschaum ist ein U-förmiges metallisches Deckprofil 20 und auf der dem Deckprofil 20 gegenüberliegenden ebenen Fläche 22 eine metallische Grundplatte 24 aufgeklebt, welche ihrerseits über eine Nietverbindung 26 mit einem Seitenwandprofil 12 verbunden ist.

Von erfindungswesentlicher Bedeutung ist ein Abstand y, welchen die beiden Schenkel des Deckprofils 20 von der Grundplatte 24 haben. Damit ist eine sehr gute Wärmeisolierung des Deckprofils 20 gewährleistet. Auch bei einer nur dünnen dekorativen Abdeckung 28, welche gestrichelt angedeutet ist, kann ein Fahrgast an das Versteifungselement 10 anlehnen, ohne wegen einer sich relativ kühl anfühlenden Berührungsfläche in seinem Wohlbehagen beeinträchtigt zu sein.

Weiter ist beachtlich, dass das kleindimensionierte Versteifungselement 10 nur wenig in das Wageninnere hineinragt und damit mehr Benutzungsraum offen lässt. Dennoch ist die mechanische Stabilität des Versteifungselements 10 hinreichend, weil der Innenraum des U-förmigen Profils nicht wie in der den bekannten Stand der Technik dokumentierenden Fig. 1 leer ist, sondern mit einem Kern 18 aus Kunststoff-Hartschaum gefüllt ist.

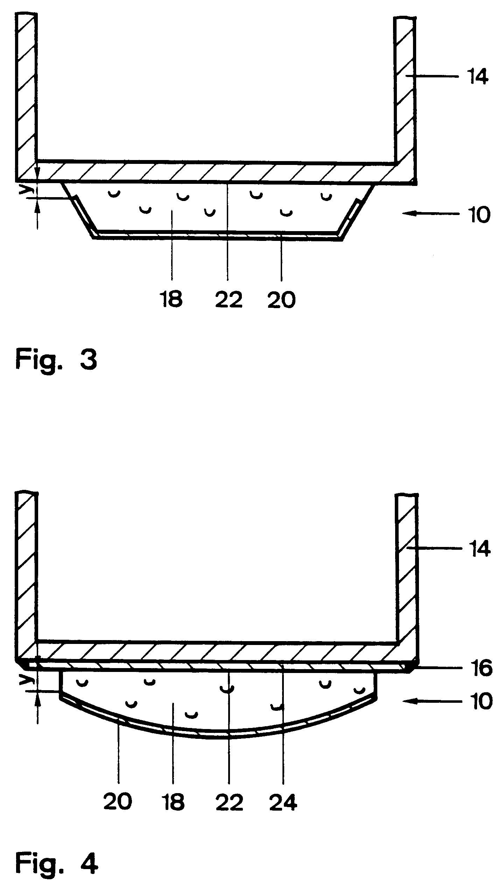

In der Ausführungsform gemäss Fig. 3 ist das Versteifungselement 10 mit der dem Deckprofil 20 gegenüberliegenden Seite 22 direkt auf einen Fensterpfosten 14 geklebt. Der Kern 18 aus Kunststoff-Hartschaum ist im Querschnitt trapezförmig ausgebildet. Das Deckprofil 20 ist in einer Aussparung eingeklebt und ist mit der Aussenfläche des Kunststoffkerns 18 oberflächenbündig. So können die Versteifungselemente ohne Abdeckung dekorativ sein.

Fig. 4 zeigt ein Versteifungselement 10 mit einem auf eine Abrundung aufgeklebten kreisbogenförmigen Deckprofil 20. Die dem Deckprofil 20 gegenüberliegende ebene Fläche 22 des Kunststoffkerns 18 ist auf eine metallische Grundplatte 24 angeklebt, welche ihrerseits über Schweissnähte 16 mit dem Fensterpfosten 14 verbunden ist. Das Deckprofil 20 hat von der Grundplatte 24 einen Abstand y, welcher die gute Wärmeisolierung gewährleistet.

Zweckmässig ist ein minimaler Abstand (y) des Deckprofils (20) der Versteifungselemente (10) von den Seitenwandprofilen (12) und/oder Fensterpfosten (14) oder von der Grundplatte (24) von beispielsweise 1 bis 5 mm und vorzugsweise 2 bis 3 mm.

## Patentansprüche

1. Wagenkasten von Schienenfahrzeugen, insbesondere zur Personenbeförderung, mit im Bereich der metallischen Seitenwandprofile (12) und/oder Fensterpfosten (14) innenseitig befestigten, senkrechten Versteifungselementen (10) für die Struktur,
dadurch gekennzeichnet, dass
als Sandwichbauteil ausgebildete Versteifungselemente (10) einen formfesten Kern (18) aus einem Isoliermaterial und ein diesen Kern (18) teilweise umhüllendes metallisches Deckprofil (20) umfassen, wobei das Deckprofil (20) der aufgebrachten Versteifungselemente (10) überall in einem minimalen Abstand (y) von den Seitenwandprofilen (12) und/oder Fensterpfosten (14) verbleibt, eine gute Wärmeisolierung zu gewährleisten.

2. Wagenkasten nach Anspruch 1, dadurch gekennzeichnet, dass der formfeste Kern (18) aus einem Kunststoff-Hartschaum, vorzugsweise aus Polyurethan, Polyvinylchlorid, Polymethacrylimid oder Polyetherimid, besteht.

3. Wagenkasten nach Anspruch 1 oder 2, dadurch gekennzeichnet, dass das Deckprofil (20) im Querschnitt U-förmig, trapezförmig oder kreisbogenförmig ausgebildet und auf den entsprechenden ausgebildeten formfesten Kern (18) geklebt ist.

4. Wagenkasten nach einem der Ansprüche 1 bis 3, dadurch gekennzeichnet, dass das Deckprofil (20) über seine Länge einen variablen Querschnitt aufweist.

5. Wagenkasten nach einem der Ansprüche 1 bis 4, dadurch gekennzeichnet, dass das Deckprofil (20) aus einer vorzugsweise superplastisch verformbaren Aluminiumlegierung oder aus Stahl oder aus hochfestem Kunststoff besteht.

6. Wagenkasten nach einem der Ansprüche 1 bis 5, dadurch gekenzeichnet, dass das Deckprofil (20) in eine Aussparung des formfesten Kerns (18) geklebt und mit diesem oberflächenbündig ist.

7. Wagenkasten nach einem der Ansprüche 1 bis 6, dadurch gekennzeichnet, dass die dem Deckprofil (20) gegenüberliegende ebene Fläche (22) des formfesten Kerns (18) der Versteifungselemente (10) direkt auf die Seitenwandprofile (12) und/oder Fensterpfosten (14) geklebt ist.

8. Wagenkasten nach einem der Ansprüche 1 bis 6, dadurch gekennzeichnet, dass die dem Deckprofil (20) gegenüberliegende ebene Fläche (22) des formfesten Kerns (18) der Versteifungselemente (10) mit einer metallischen Grundplatte (24), vorzugsweise aus einer Aluminiumlegierung oder aus Stahl oder hochfestem Kunststoff, verklebt ist, welche ihrerseits mit den Seitenwandprofilen (12) und/oder Fensterpfosten (14) verbunden ist.

9. Wagenkasten nach Anspruch 8, dadurch gekennzeichnet, dass die Grundplatte (24) der Versteifungselemente (10) mit den Seitenwandprofilen und/oder Fensterpfosten (14) vernietet (26), verschraubt, verschweisst oder verklebt ist.

10. Wagenkasten nach einem der Ansprüche 1 bis 9, dadurch gekennzeichnet, dass die Versteifungselemente (10) mit einer dünnen Abdeckung (28) verkleidet sind.

## Claims

1. Body of railway vehicles, in particular for passenger traffic, comprising vertical stiffening elements (10) for the structure secured on the inside in the region of the metal side panel profiles (12) and/or window posts (14), characterised in that stiffening elements (10) in the form of sandwich components include a dimensionally stable core (18) made of an insulating material and a metal cover profile (20) partially enveloping this core (18), the cover profile (20) of the stiffening elements (10) applied remaining at a minimum distance (y) from the side panel profiles (12) and/or window posts (14) all around in order to ensure good thermal insulation.

2. Body according to claim 1, characterised in that the dimensionally stable core (18) consists of a rigid plastic foam, preferably of polyurethane, polyvinyl chloride, polymethacrylimide or polyether imide.

3. Body according to claim 1 or claim 2, characterised in that the cover profile (20) has a U-shaped, trapezoidal or circular arc-shaped cross section and is glued on to the correspondingly shaped dimensionally stable core (18).

4. Body according to one of claims 1 to 3, characterised in that the cover profile (20) has a variable cross section over its length.

5. Body according to one of claims 1 to 4, characterised in that the cover profile (20) consists of a preferably superplastically deformable aluminium alloy or of steel or of high-strength plastic.

6. Body according to one of claims 1 to 5, characterized in that the cover profile (20) is glued into a recess in the dimensionally stable core (18) and its surface is flush with the surface thereof.

7. Body according to one of claims 1 to 6, characterized in that the flat surface (22) of the dimensionally stable core (18) of the stiffening elements (10) opposite the cover profile (20) is glued directly on to the side panel profiles (12) and/or window posts (14).

8. Body according to one of claims 1 to 6, characterised in that the flat surface (22) of the dimensionally stable core (18) of the stiffening elements (10) opposite the cover profile (20) is glued to a metal base plate (24), preferably consisting of an aluminium alloy or of steel or of high-strength plastic, and in turn connected to the side panel profiles (12) and/or window posts (14).

9. Body according to claim 8, characterized in that the base plate (24) of the stiffening elements (10) is riveted (26), screwed, welded or glued to the side panel profiles and/or window posts (14).

10. Body according to one of claims 1 to 9, characterized in that the stiffening elements (10) are clad with a thin cover (28).

## Revendications

1. Caisse pour des véhicules ferroviaires, en particulier pour le transport des personnes, comportant des éléments de rigidification (10) pour la structure, qui sont fixés à l'intérieur dans la zone des profilés métalliques de paroi latérale (12) et/ou des montants de fenêtre (14) et qui s'étendent verticalement, caractérisée en ce que les éléments de rigidification (10) réalisés sous forme d'un composant sandwich comprennent un noyau de forme stable (18) constitué en une matière isolante et un profilé de recouvrement métallique (20) qui entoure partiellement ce noyau (18), le profilé de recouvrement (20) des éléments de rigidification appliqués (10) restant écarté partout à une distance minimale (y) par rapport aux profilés de paroi latérale (12) et/ou aux montants de fenêtre (14), afin d'assurer une bonne isolation thermique.

2. Caisse selon la revendication 1, caractérisée en ce que le noyau de forme stable (18) est constitué en une mousse dure en matière plastique, de préférence en polyuréthane, en chlorure de polyvinyle, en polymétacryl-imide ou en polyéther-imide.

3. Caisse selon l'une ou l'autre des revendications 1 et 2, caractérisée en ce que le profilé de recouvrement (20) présente une section transversale en forme de U, de trapèze ou d'arc de cercle, et en qu'il est collé sur le noyau de forme stable (18) réalisé en correspondance.

4. Caisse selon l'une quelconque des revendications 1 à 3, caractérisée en ce que le profilé de recouvrement (20) présente une section transversale variable sur sa longueur.

5. Caisse selon l'une quelconque des revendications 1 à 4, caractérisée en ce que le profilé de recouvrement (20) est constitué en un alliage d'aluminium, de préférence déformable à l'état superplastique, ou en acier ou bien en une matière plastique fortement rigide.

6. Caisse selon l'une quelconque des revendications 1 à 5, caractérisée en ce que le profilé de recouvrement (20) est collé dans un évidement du noyau de forme stable (18) et en ce qu'il est en affleurement de surface avec celui-ci.

7. Caisse selon l'une quelconque des revendications 1 à 6, caractérisée en ce que la surface plane (22) du noyau de forme stable (18) des éléments de rigidification (10), qui est en vis-à-vis du profilé de recouvrement (20), est collée directement sur les profilés de paroi latérale (12) et/ou sur les montants de fenêtre (14).

8. Caisse selon l'une quelconque des revendications 1 à 6, caractérisée en ce que la surface plane (22) du noyau de forme stable (18) des éléments de rigidification (10), qui est en vis-à-vis du profilé de recouvrement (20), est collée sur une plaque de base métallique (24), constituée de préférence en un alliage d'aluminium ou en acier ou bien en une matière plastique fortement rigide, laquelle est reliée à son tour aux profilés de paroi latérale (12) et/ou aux montants de fenêtre (14).

9. Caisse selon la revendication 8, caractérisée en ce que la plaque de base (24) des éléments de rigidification (10) est rivée (26), vissée, soudée, ou collée sur les profilés de paroi latérale et/ou les montants de fenêtre (14).

10. Caisse selon l'une quelconque des revendications 1 à 9, caractérisée en ce que les éléments de rigidification (10) sont revêtus d'un recouvrement mince (28).
